# EUROPEAN PATENT APPLICATION

(11) **EP 4 425 653 A1**
(43) Date of publication of application: **04.09.2024**
(21) Application number: 22947210.5
(22) Date of filing: 21.06.2022
(51) Int. Cl.: H01M 50/147, H01M 50/152

(54) **BATTERY CELL, BATTERY AND ELECTRIC APPARATUS**

(71) Applicant: Contemporary Amperex Technology Co., Limited, Ningde, Fujian 352100 (CN)
(72) Inventor: JIN, Haizu, Ningde, Fujian 352100 (CN); GU, Hui, Ningde, Fujian 352100 (CN); JIANG, Lingyan, Ningde, Fujian 352100 (CN); LIU, Chao, Ningde, Fujian 352100 (CN)
(74) Representative: Gong, Jinping
(86) International application number: PCT/CN2022/100173
(87) International publication number: WO 2023/245430

(57) **Abstract**

The embodiments of the present application provide a battery cell, a battery and a power consuming device, which fall within the technical field of batteries. The battery cell includes an electrode assembly and a shell. The shell accommodates the electrode assembly, and includes a wall portion that is arranged opposite the electrode assembly in a thickness direction of the wall portion. The wall portion is provided with a first reinforcement portion in a protruding manner, the first reinforcement portion extends in a circumferential direction of the wall portion, the wall portion includes a first region located on an outer circumferential side of the first reinforcement portion, and a weak portion is formed in the first region and is configured to rupture during pressure relief of the battery cell. The first reinforcement portion has an effect of reinforcing the wall portion to strengthen the weak portion. Since the weak portion is formed in the first region located on the outer circumferential side of the first reinforcement portion, when the wall portion is subjected to an external force to cause deformation of the portion located on an inner circumferential side of the first reinforcement portion, the first reinforcement portion can reduce the impact of the external force on the weak portion to reduce the deformation of the weak portion to ensure the normal initiation pressure of the battery cell, thereby prolonging the service life of the battery cell.

## Description

### Technical Field

The present application relates to the technical field of batteries, and in particular to a battery cell, a battery and a power consuming device.

### Background Art

At present, with the development of new energy technology, batteries are becoming more and more widely used, for example, in mobile phones, notebook computers, electric mopeds, electric vehicles, electric aircrafts, electric ships, electric toy cars, electric toy ships, electric toy aircrafts, electric tools, etc.

A battery cell, as an energy storage element, generally outputs electric energy through a chemical reaction between an electrode assembly and an electrolyte. In the battery technology, it is necessary to consider not only the safety of the battery cell, but also the service life of the battery cell. Therefore, how to prolong the service life of the battery cell is an urgent problem to be solved in the battery technology.

### Summary of the Invention

The embodiments of the present application provide a battery cell, a battery and a power consuming device, which can effectively prolong the service life of the battery cell.

In a first aspect, the embodiments of the present application provide a battery cell, including an electrode assembly and a shell, the shell accommodating the electrode assembly, and including a wall portion that is arranged opposite the electrode assembly in a thickness direction of the wall portion, wherein the wall portion is provided with a first reinforcement portion in a protruding manner, the first reinforcement portion extends in a circumferential direction of the wall portion, the wall portion includes a first region located on an outer circumferential side of the first reinforcement portion, and a weak portion is formed in the first region and is configured to rupture during pressure relief of the battery cell.

In the technical solution described above, the wall portion is provided with the first reinforcement portion in a protruding manner, and the first reinforcement portion has an effect of reinforcing the wall portion to strengthen the weak portion. Since the weak portion is formed in the first region located on the outer circumferential side of the first reinforcement portion, when the wall portion is subjected to an external force to cause deformation of the portion located on an inner circumferential side of the first reinforcement portion, the first reinforcement portion can reduce the impact of the external force on the weak portion to reduce the deformation of the weak portion to ensure the normal initiation pressure of the battery cell, thereby prolonging the service life of the battery cell.

In some embodiments, the wall portion further includes a second region located on the inner circumferential side of the first reinforcement portion, and the second region is provided with a filling port. The filling port is arranged in the second region of the wall portion to facilitate the filling of an electrolyte into the battery cell. When the electrolyte is filled into the battery cell through the filling port, the second region is easy to deform toward the inside of the battery cell when being subjected to a compressing force exerted by a filling apparatus, and the first reinforcement portion can reduce the impact of deformation of the second region on the weak portion, so as to reduce the deformation of the weak portion to reduce the risk of rupture of the weak portion before reaching the initiation pressure due to the deformation of the weak portion during the process of filling the electrolyte into the battery cell through the filling port.

In some embodiments, the filling port is coaxially arranged with the first reinforcement portion. In this way, when the electrolyte is filled into the battery cell through the filling port, the force acting on the first reinforcement portion is uniform, which can further reduce the deformation of the weak portion.

In some embodiments, in the thickness direction of the wall portion, the first reinforcement portion is arranged, in a protruding manner, on a side of the wall portion facing the electrode assembly. In this way, the first reinforcement portion faces the inside of the battery cell, which reduces the excessive external space occupied by the first reinforcement portion to reduce the volume of the battery cell.

In some embodiments, the first reinforcement portion abuts on the electrode assembly in the thickness direction of the wall portion. When the wall portion is subjected to the external force to cause the portion located on the inner circumferential side of the first reinforcement portion to deform toward the inside of the battery cell, since the first reinforcement portion abuts on the electrode assembly, the electrode assembly has an effect of restricting the first reinforcement portion to reduce the risk of deformation of the weak portion.

In some embodiments, in the thickness direction of the wall portion, the wall portion is provided with a first recess on a side facing away from the electrode assembly and at a position corresponding to the first reinforcement portion. With the first recess, the first reinforcement portion has a good buffering capacity, so that when the wall portion is subjected to an external force to cause deformation of the portion located on the inner circumferential side of the first reinforcement portion, the first reinforcement portion has a good buffering effect to prevent the transfer of the external force to the weak portion and thus further reduce the deformation of the weak portion.

In some embodiments, the width of the first reinforcement portion in a radial direction of the wall portion is represented by a₁, the inner diameter of the first reinforcement portion is represented by r₁, and the radius of the wall portion is represented by R, which satisfy 0.05 ≤ a₁/R ≤ 0.8 and/or 0.05 ≤ r₁/R ≤ 0.8.

In some embodiments, the first region is provided with a second reinforcement portion in a protruding manner, the second reinforcement portion extending in a circumferential direction of the wall portion; and the first region includes a first connection portion that connects the first reinforcement portion with the second reinforcement portion, the first connection portion being located on the outer circumferential side of the first reinforcement portion, and the second reinforcement portion being located on an outer circumferential side of the first connection portion, wherein the weak portion is formed at the first connection portion. The weak portion is formed at the first connection portion connected between the first reinforcement portion and the second reinforcement portion, and the second reinforcement portion can also strengthen the weak portion.

In some embodiments, the second reinforcement portion is arranged, in a protruding manner, on a side of the first region facing the electrode assembly, and in the thickness direction of the wall portion, the second reinforcement portion has a first surface facing the electrode assembly, the first surface abutting on the electrode assembly to achieve electrical connection between the wall portion and the electrode assembly. The first surface abuts on the electrode assembly, which on the one hand achieves the electrical connection between the wall portion and the electrode assembly to facilitate the output of electric energy of the battery cell by means of the wall portion, and on the other hand allows the electrode assembly to be supported by the second reinforcement portion to improve the stability of the electrode assembly inside the shell.

In some embodiments, the first reinforcement portion does not extend beyond the first surface in a direction of the wall portion pointing toward the electrode assembly. This ensures that the first surface can effectively abut on the electrode assembly.

In some embodiments, in the thickness direction of the wall portion, the first reinforcement portion includes a second surface facing the electrode assembly, the second surface being flush with the first surface. In this way, both the second surface and the first surface can abut on the electrode assembly, which on the one hand increases the current-passing area, and on the other hand allows the first reinforcement portion to abut on the electrode assembly to reduce the impact on the weak portion when the portion of the wall portion located on the inner circumferential side of the first reinforcement portion is subjected to a force.

In some embodiments, in the thickness direction of the wall portion, the wall portion includes a third surface that faces away from the electrode assembly and is farthest from the first surface, and the first connection portion is located between the first surface and the third surface in the thickness direction of the wall portion. In this way, the first connection portion is located between the first surface and the third surface in the thickness direction of the wall portion, making it difficult for an external force to directly act on the first connection portion, so as to effectively reduce the impact of the external force on the weak portion during the production and use of the battery cell.

In some embodiments, the first region further includes an edge portion, which is connected to the second reinforcement portion and located on an outer circumferential side of the second reinforcement portion; and a surface of the edge portion facing away from the electrode assembly in the thickness direction of the wall portion is a third surface. The edge portion has an effect of protecting the first connection portion, making it difficult for an external force to directly act on the first connection portion.

In some embodiments, in the thickness direction of the wall portion, a distance between the third surface and the first surface is represented by H, the height of the first reinforcement portion protruding from the wall portion is represented by hi, and the height of the second reinforcement portion protruding from the wall portion is represented by h₂, which satisfy 0.1 ≤ h₁/H ≤ 0.9 and/or 0.1 ≤ h₂/H ≤ 0.9.

In some embodiments, in the thickness direction of the wall portion, the first region is provided with a second recess on a side away from the electrode assembly and at a position corresponding to the second reinforcement portion. With the second recess, the second reinforcement portion has a good buffering capacity, so that when the region of the wall portion located on the outer circumferential side of the second reinforcement portion is subjected to an external force, the second reinforcement portion has a good buffering effect to prevent the transfer of the external force to the weak portion and thus further reduce the deformation of the weak portion.

In some embodiments, the second reinforcement portion is welded to the electrode assembly to achieve electrical connection between the wall portion and the electrode assembly; or the battery cell further includes a current collecting member, which is arranged between the wall portion and the electrode assembly in the thickness direction of the wall portion and is connected to the electrode assembly, and the second reinforcement portion is welded to the current collecting member, so as to achieve the electrical connection between the wall portion and the electrode assembly. Whether the second reinforcement portion is welded to the electrode assembly or to the current collecting member, the stability of the electrical connection between the wall portion and the electrode assembly can be improved.

In some embodiments, in the radial direction of the wall portion, the width of the second reinforcement portion is represented by a₂, the radius of the wall portion is represented by R, a distance from an outer edge of the second reinforcement portion to an outer edge of the wall portion is represented by Li, and a distance between the first reinforcement portion and the second reinforcement portion is represented by L₂, which satisfy 0.05 ≤ a₂/R ≤ 0.8, and/or 0.02 ≤ L₁/R ≤ 0.8, and/or 0.05 ≤ L₂/R ≤ 0.8.

In some embodiments, in the thickness direction of the wall portion, a part of the first connection portion protrudes to form a third reinforcement portion, the third reinforcement portion extends in the circumferential direction of the wall portion, and the weak portion is formed at the third reinforcement portion. The third reinforcement portion can strengthen the first connection portion and thus further reduce the impact on the weak portion due to the deformation of the wall portion by force.

In some embodiments, the width of the third reinforcement portion in the radial direction of the wall portion is represented by a₃, and the radius of the wall portion is represented by R, which satisfy 0.05 ≤ a₃/R ≤ 0.8.

In some embodiments, the first region is provided with an indentation, and a weak portion is formed in the first region at a position where the indentation is provided. The weak portion is correspondingly formed by means of providing the indentation in the first region, so that the weak portion is thinner than other regions and is more likely to rupture, and the weak portion is formed by a simple forming method.

In some embodiments, the indentation is arranged around the first reinforcement portion; and the indentation is of a non-closed structure with a distance between two ends, or the indentation is of a closed structure connected end-to-end. In this way, the wall portion can be opened in a region defined by the indentation during pressure relief of the battery cell, so that the battery cell has a large pressure relief area, improving the pressure relief efficiency.

In some embodiments, the shell includes a shell body and an end cap; an opening is formed at one end of the shell body, and the shell body includes a bottom wall opposite the opening; and the end cap is connected to the shell body and closes the opening, wherein one of the bottom wall and the end cap is the wall portion. The bottom wall of the shell body may serve as the wall portion, so that the bottom wall of the shell body has a pressure relief capability; or the end cap of the shell may serve as the wall portion, so that the end cap has a pressure relief capability.

In some embodiments, the battery cell further includes an electrode terminal, which is arranged at an end of the shell opposite the wall portion in the thickness direction of the wall portion and is electrically connected to the electrode assembly. The electric energy of the battery cell can be conveniently output by means of the electrode terminal.

In some embodiments, the electrode terminal includes a first outer surface facing away from the electrode assembly in the thickness direction of the wall portion, the electrode terminal is provided with a groove that is recessed from the first outer surface toward the electrode assembly, a second connection portion is formed in the electrode terminal at a position where the groove is provided, and the second connection portion is connected to the electrode assembly. Providing the groove in the electrode terminal reduces the weight of the electrode terminal and reduces the production cost. In addition, since the electrode terminal is provided with the groove, the second connection portion of the electrode terminal is thinner, which can achieve the external welding for the electrode terminal, improving the stability of the electrical connection between the electrode terminal and the electrode assembly.

In some embodiments, the battery cell further includes a blocking member, which is connected to the electrode terminal and blocks the groove; and in the thickness direction of the wall portion, the blocking member includes a second outer surface facing away from the electrode assembly, the second outer surface being flush with the first outer surface. The second outer surface of the blocking member and the first outer surface of the electrode terminal can jointly form a flat interface, which is conducive to welding with other components to achieve large current-passing area.

In a second aspect, the embodiments of the present application provide a battery, including a case and a battery cell provided in any one of the embodiments in the first aspect, the battery cell being accommodated in the case.

In a third aspect, the embodiments of the present application further provide a power consuming device, including a battery provided in any one of the embodiments in the second aspect.

### Brief Description of the Drawings

In order to more clearly describe the technical solutions of embodiments of the present application, the accompanying drawings required in the embodiments will be described briefly below. It should be understood that the following drawings illustrate only some embodiments of the present application and thus should not be construed as a limitation on the scope thereof. For those of ordinary skill in the art, other relevant drawings can also be obtained from these drawings without involving any inventive effort.
FIG. 1 is a schematic structure diagram of a vehicle according to some embodiments of the present application;
FIG. 2 is an exploded view of a battery according to some embodiments of the present application;
FIG. 3 is an exploded view of a battery cell according to some embodiments of the present application;
FIG. 4 is a cross-sectional view of the battery cell shown in FIG. 3;
FIG. 5 is a partial enlarged view of the battery cell shown in FIG. 4;
FIG. 6 is a schematic structure diagram of a wall portion shown in FIG. 5;
FIG. 7 is a schematic structure diagram of a wall portion according to some other embodiments of the present application;
FIG. 8 is a top view of the wall portion shown in FIG. 6;
FIG. 9 is a cross-sectional view of a battery cell according to some other embodiments of the present application; and
FIG. 10 is a partial enlarged view of part A of the battery cell shown in FIG. 9.

List of reference signs: 1 - shell; 11 - shell body; 111 - bottom wall; 12 - end cap; 13 - wall portion; 131 - first reinforcement portion; 1311 - second surface; 132 - first region; 1321 - weak portion; 1322 - first connection portion; 1323 - edge portion; 1324 - third surface; 1325 - third reinforcement portion; 1326 - third recess; 1327 - indentation; 133 - second region; 1331 - filling port; 134 - first recess; 135 - second reinforcement portion; 1351 - first surface; 136 - second recess; 2 - electrode assembly; 21 - tab; 21a - positive tab; 21b - negative tab; 3 - electrode terminal; 31 - first outer surface; 32 - groove; 321 - first groove; 322 - second groove; 33 - second connection portion; 34 - first inner surface; 4 - current collecting member; 5 - blocking member; 51 - second outer surface; 10 - battery cell; 20 - case; 201 - first portion; 202 - second portion; 100 - battery; 200 - controller; 300 - motor; 1000 - vehicle; Z - thickness direction.

### Detailed Description of Embodiments

In order to make the objectives, technical solutions and advantages of the embodiments of the present application clearer, the technical solutions in the embodiments of the present application will be described clearly below with reference to the drawings in the embodiments of the present application. Apparently, the embodiments described are some of, but not all, the embodiments of the present application. All other embodiments obtained by those of ordinary skill in the art based on the embodiments of the present application without involving any inventive effort shall fall within the scope of protection of the present application.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprising" and "including" and any variations thereof in the description and the claims of the present application as well as the brief description of the accompanying drawings described above are intended to cover non-exclusive inclusion. The terms "first", "second", etc. in the description and the claims of the present application as well as the foregoing accompanying drawings are used to distinguish between different objects, rather than describing a specific order or a primary-secondary relationship.

In the present application, the phrase "embodiment" mentioned means that the specific features, structures and characteristics described with reference to the embodiments may be included in at least one embodiment of the present application. The phrase at various locations in the description does not necessarily refer to the same embodiment, or an independent or alternative embodiment exclusive of another embodiment.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or may be a direct connection, an indirect connection by means of an intermediate medium, or internal communication between two elements. For those of ordinary skill in the art, the specific meanings of the foregoing terms in the present application may be understood according to specific circumstances.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated apparatus are merely illustrative and should not be construed to limit the present application in any way.

The phrase "multiple" appearing in the present application means two or more (including two).

In the present application, a battery cell may include a lithium-ion secondary battery, a lithium-ion primary battery, a lithium-sulfur battery, a sodium/lithium- ion battery, a sodium-ion battery or a magnesium-ion battery, etc., which is not limited by the embodiments of the present application. The battery cell may be cylindrical, flat, cuboid or in other shapes, which will also not be limited in the embodiments of the present application. The battery cells are generally classified into three types depending on the way of package: cylindrical battery cells, prismatic battery cells and pouch battery cells, which will also not be limited in the embodiments of the present application.

A battery mentioned in the embodiments of the present application refers to a single physical module including one or more battery cells to provide a higher voltage and capacity. For example, the battery mentioned in the present application may include a battery module, a battery pack, etc. The battery generally includes a case for packaging one or more battery cells. The case can prevent liquid or other foreign matters from affecting charging or discharging of the battery cell(s).

The battery cell includes an electrode assembly and an electrolyte. The electrode assembly is composed of a positive electrode plate, a negative electrode plate, and a separator. The operation of the battery cell mainly relies on the movement of metal ions between the positive electrode plate and the negative electrode plate. The positive electrode plate includes a positive current collector and a positive active material layer. A surface of the positive current collector is coated with the positive active material layer, the positive current collector not coated with the positive active material layer protrudes from the positive current collector coated with the positive active material layer, and the positive current collector not coated with the positive active material layer serves as a positive tab. Taking a lithium ion battery as an example, the positive electrode current collector may be made of aluminum, and the positive electrode active material may be lithium cobalt oxide, lithium iron phosphate, ternary lithium, lithium manganate, etc. The negative electrode plate includes a negative current collector and a negative active material layer. A surface of the negative current collector is coated with the negative active material layer, the negative current collector that is not coated with the negative active material layer protrudes from the negative current collector coated with the negative active material layer, and the negative current collector that is not coated with the negative active material layer is used as a negative tab. The negative electrode current collector may be made of copper, and the negative electrode active material may be carbon, silicon, etc. In order to ensure that no fusing occurs when a large current passes, multiple positive tabs are provided and are stacked together, and multiple negative tabs are provided and are stacked together. The separator may be made of polypropylene (PP) or polyethylene (PE), etc. In addition, the electrode assembly may be of a wound structure or a laminated structure, which will not be limited in the embodiments of the present application.

Design factors on many aspects need to be simultaneously considered for the development of the battery technology, such as energy density, cycling life, discharge capacity, charge-discharge rate, and other performance parameters. In addition, the safety of the battery needs to be considered.

With regard to the battery cell, in order to improve the safety of the battery cell, a pressure relief mechanism may be provided in the battery cell, and when the internal pressure of the battery cell reaches an initiation pressure, the internal pressure of the battery cell is released by means of the pressure relief mechanism.

In order to reduce the manufacturing cost of the pressure relief mechanism, a part of a wall portion of a shell may form a weak portion, so as to form a pressure relief mechanism, and when the internal pressure of the battery cell reaches the initiation pressure, the weak portion is ruptured to achieve the purpose of pressure relief.

The inventors have noticed that, for the battery cell in which the pressure relief mechanism is formed by the weak portion of the wall portion, it is easy for the weak portion to rupture abnormally when the internal pressure of the battery cell does not reach the initiation pressure, shortening the service life of the battery cell.

The inventors have found through further research that the wall portion is easy to deform by an external force during normal use of the battery cell to cause deformation of the weak portion, so that the strength of the weak portion is reduced to result in the abnormal rupture of the weak portion. For example, the wall portion is subjected to a force exerted by other components outside the battery cell to cause a central region of the wall portion to deform toward the inside of the battery cell, so that the strength of the weak portion is reduced. For another example, the internal pressure of the battery cell increases as the temperature rises, and the wall portion is subjected to a force exerted by the gas inside the battery cell to cause the central region of the wall portion to deform toward the outside of the battery cell, so that the strength of the weak portion is reduced. These finally affect the service life of the battery cell.

In view of this, the embodiments of the present application provide a battery cell. A wall portion of a shell is provided with a first reinforcement portion in a protruding manner that extends in a circumferential direction of the wall portion, a first region is formed in the wall portion on an outer circumferential side of the first reinforcement portion, and a weak portion is formed in the first region.

In such a battery cell, the wall portion is provided with the first reinforcement portion in a protruding manner, and the first reinforcement portion has an effect of reinforcing the wall portion to strengthen the weak portion. Since the weak portion is formed in the first region located on the outer circumferential side of the first reinforcement portion, when the wall portion is subjected to an external force to cause deformation of the portion located on an inner circumferential side of the first reinforcement portion, the first reinforcement portion can reduce the impact of the external force on the weak portion to reduce the deformation of the weak portion to ensure the normal initiation pressure of the battery cell, thereby prolonging the service life of the battery cell.

The technical solutions described in the embodiments of the present application are applicable to a battery and a power consuming device using the battery.

The power consuming device may be a vehicle, a mobile phone, a portable device, a notebook computer, a ship, a spacecraft, an electric toy, a power tool, etc. The vehicle may be a fuel vehicle, a gas vehicle or a new energy vehicle. The new energy vehicle may be a battery electric vehicle, a hybrid vehicle, an extended range vehicle, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembly electric tool, and a railway electric tool, such as an electric drill, an electric grinder, an electric wrench, an electric screwdriver, an electric hammer, an electric impact drill, a concrete vibrator, and an electric planer. The power consuming devices described above are not specially limited in the embodiments of the present application.

For ease of description, an example in which the power consuming device refers to a vehicle is used for description in the following embodiments.

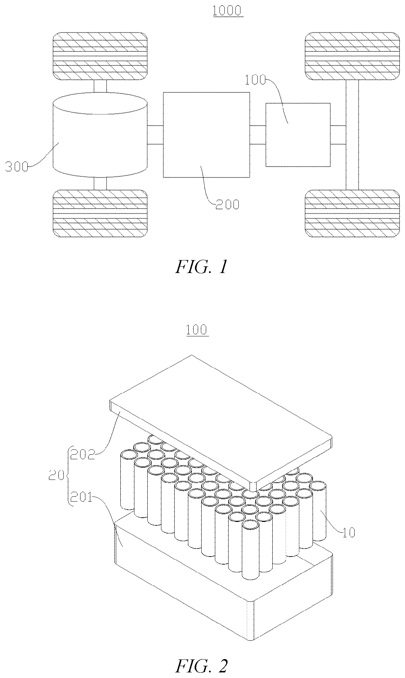

Referring to FIG. 1, FIG. 1 is a schematic structure diagram of a vehicle 1000 according to some embodiments of the present application. A battery 100 is provided inside the vehicle 1000, and the battery 100 may be arranged at the bottom, the head or the tail of the vehicle 1000. The battery 100 may be configured to supply power to the vehicle 1000. For example, the battery 100 may serve as an operation power supply for the vehicle 1000.

The vehicle 1000 may further include a controller 200 and a motor 300. The controller 200 is configured to control the battery 100 to supply power to the motor 300, for example, to meet working power requirements during starting, navigation and traveling of the vehicle 1000.

In some embodiments of the present application, the battery 100 can not only serve as an operation power supply for the vehicle 1000, but can also serve as a driving power supply for the vehicle 1000, in place of or partially in place of fuel or natural gas, to provide driving power for the vehicle 1000.

Referring to FIG. 2, FIG. 2 is an exploded view of a battery 100 according to some embodiments of the present application. The battery 100 includes a battery cell 10 and a case 20. The battery cell 10 is accommodated in the case 20.

The case 20 herein is a component for accommodating the battery cells 10, the case 20 provides an accommodating space for the battery cells 10, and the case 20 may be of various structures. In some embodiments, the case 20 may include a first portion 201 and a second portion 202. The first portion 201 and the second portion 202 fit to each other in a covering manner to define the accommodating space for accommodating the battery cells 10. The first portion 201 and the second portion 202 may be in various shapes, such as cuboid or cylindrical. The first portion 201 may be of a hollow structure with an open side, the second portion 202 may also be of a hollow structure with an open side, and the open side of the second portion 202 covers the open side of the first portion 201 to form the case 20 having the accommodating space. Alternatively, the first portion 201 is of a hollow structure with an open side, the second portion 202 is of a plate-like structure, and the second portion 202 covers the open side of the first portion 201 to form the case 20 having the accommodating space. The first portion 201 and the second portion 202 may be sealed by a sealing element which may be a seal ring, a sealant, etc.

In the battery 100, one or more battery cells 10 may be provided. If multiple battery cells 10 are provided, the multiple battery cells 10 may be connected in series, in parallel, or in series-parallel. The series-parallel connection refers that some of the multiple battery cells 10 are connected in series and the rest are connected in parallel. The multiple battery cells 10 may be connected in series, in parallel or in series-parallel to form a battery module, and then multiple battery modules are connected in series, in parallel or in series-parallel to form a unit and are accommodated in the case 20. Alternatively, all the battery cells 10 are directly connected in series, in parallel, or in series-parallel, and then a unit composed of all the battery cells 10 is accommodated in the case 20.

In some embodiments, the battery 100 may further include a busbar component, and the multiple battery cells 10 may be electrically connected to each other by means of the busbar component, so that the multiple battery cells 10 are connected in series, in parallel or in series-parallel. The busbar component may be a conductor made of metal, such as copper, iron, aluminum, stainless steel, or aluminum alloy.

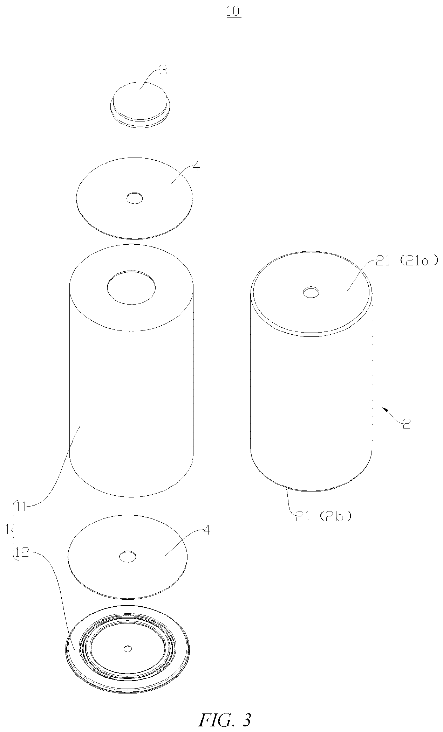

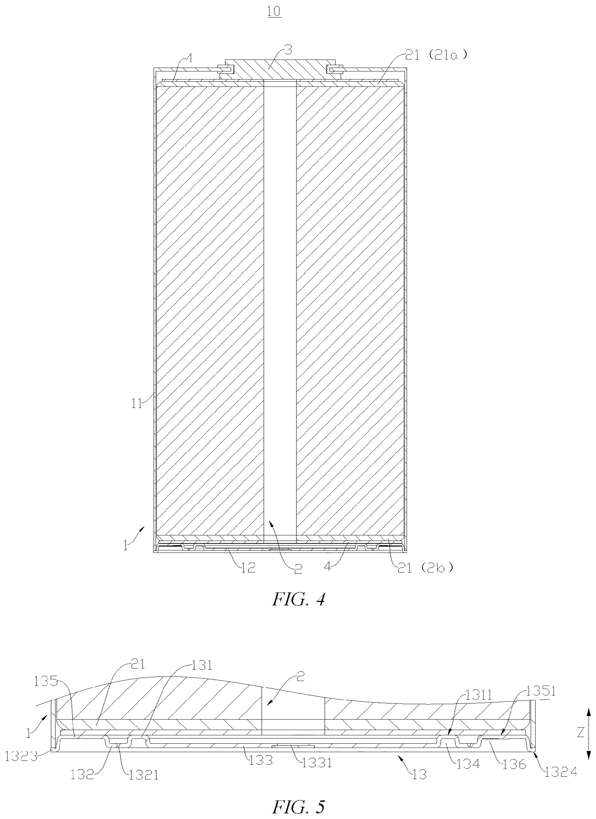

Referring to FIGS. 3 and 4, FIG. 3 is an exploded view of the battery cell 10 according to some embodiments of the present application, and FIG. 4 is a cross-sectional view of the battery cell 10 shown in FIG. 3. The battery cell 10 may include a shell 1 and an electrode assembly 2.

The shell 1 is a component for accommodating the electrode assembly 2. The shell 1 may be in various shapes, such as cylindrical or cuboid. The shell 1 may include a shell body 11 and an end cap 12.

The shell body 11 may be of a hollow structure with an opening formed at one end. The shell body 11 may be made of various materials, such as copper, iron, aluminum, steel, or aluminum alloy.

The end cap 12 is a component that closes the opening of the shell body 11 to isolate the internal environment of the battery cell 10 from the external environment. The end cap 12 and the shell body 11 jointly define a sealed space for accommodating the electrode assembly 2, an electrolyte and other components. The end cap 12 may be connected to the shell body 11 by means of welding or crimping to close the opening of the shell body 11. The end cap 12 may have a shape adapted to that of the shell 1. For example, the shell body 11 is of a cuboid structure, and the end cap 12 is of a rectangular plate-like structure adapted to the shell 1. For another example, the shell body 11 is a cylinder, and the end cap 12 is of a circular plate-like structure adapted to the shell body 11. The end cap 12 may be made of various materials, such as copper, iron, aluminum, steel, or aluminum alloy.

The electrode assembly 2 is a component in the battery cell 10 where an electrochemical reaction occurs. The electrode assembly 2 may include a positive electrode plate, a negative electrode plate, and a separator. The electrode assembly 2 may be of a wound structure formed by winding the positive electrode plate, the separator and the negative electrode plate, or may be a stacked structure formed by stacking the positive electrode plate, the separator and the negative electrode plate. The electrode assembly 2 is provided with tabs 21. The tabs 21 include a positive tab 21a and a negative tab 21b. The positive tab 21a may be a portion of the positive electrode plate that is not coated with a positive electrode active material layer, and the negative tab 21b may be a portion of the negative electrode plate that is not coated with a negative electrode active material layer.

The battery cell 10 may further include an electrode terminal 3. The electrode terminal 3 is configured to be electrically connected to the tab 21 of the electrode assembly 2 to output the electric energy of the battery cell 10. The electrode terminal 3 may be arranged on the end cap 12 or on the shell 1. The electrode terminal 3 may be directly connected to the tab 21, for example, the electrode terminal 3 is directly welded to the tab 21. The electrode terminal 3 may also be indirectly connected to the tab 21, for example, the electrode terminal 3 may be indirectly connected to the tab 21 by means of a current collecting member 4. The current collecting member 4 may be a conductor made of metal such as copper, iron, aluminum, steel, or aluminum alloy.

As shown in FIGS. 3 and 4, taking an example in which the electrode terminal 3 is arranged at an end of the shell 1 opposite the end cap 12, the positive tab 21a is electrically connected to the electrode terminal 3 by means of one current collecting member 4, and the negative tab 21b is electrically connected to the shell body 11 by means of another current collecting member 4.

Referring to FIG. 5, FIG. 5 is a partial enlarged view of the battery cell 10 shown in FIG. 4. The embodiments of the present application provide a battery cell 10, including a shell 1 and an electrode assembly 2. The shell 1 accommodates the electrode assembly 2, the shell 1 includes a wall portion 13, and the wall portion 13 is arranged opposite the electrode assembly 2 in a thickness direction Z of the wall portion 13. The wall portion 13 is provided with a first reinforcement portion 131 in a protruding manner, the first reinforcement portion 131 extends in a circumferential direction of the wall portion 13, the wall portion 13 includes a first region 132 located on an outer circumferential side of the first reinforcement portion 131, a weak portion 1321 is formed in the first region 132, and the weak portion 1321 is configured to rupture during pressure relief of the battery cell 10.

The wall portion 13 may be the end cap 12 of the shell 1, or may be a wall of the shell body 11 opposite the end cap 12. The wall portion 13 may be circular or rectangular. If the shell 1 is cylindrical, the wall portion 13 is circular; and if the shell 1 is cuboid, the wall portion 13 is rectangular. Taking an example in which the shell 1 is cylindrical, an axial direction of the shell 1 is a thickness direction Z of the wall portion 13.

The wall portion 13 can serve as an electric energy output component of the battery cell 10, and the wall portion 13 is electrically connected to the electrode assembly 2 to output the electric energy of the battery cell 10. Illustratively, in FIGS. 4 and 5, the wall portion 13 is the end cap 12, and the end cap 12 is electrically connected to the tab 21 of the electrode assembly 2 by means of the current collecting member 4.

The wall portion 13 is provided with a first reinforcement portion 131 in a protruding manner, that is, the first reinforcement portion 131 is arranged on the wall portion 13 and protrudes from the wall portion 13. In the thickness direction Z of the wall portion 13, the first reinforcement portion 131 may be arranged, in a protruding manner, on a side of the wall portion 13 facing the electrode assembly 2, so that the first reinforcement portion 131 faces the inside of the battery cell 10, and the first reinforcement portion 131 may also be arranged, in a protruding manner, on a side of the wall portion 13 facing away from the electrode assembly 2, so that the first reinforcement portion 131 faces the outside of the battery cell 10.

The first reinforcement portion 131 may be of a ring structure, such as a circular ring or a square ring. Taking an example in which the wall portion 13 is circular, a circular ring structure may be formed by the first reinforcement portion 131 extending in the circumferential direction of the wall portion 13.

The first region 132 is a portion of the wall portion 13 located on the outer circumferential side of the first reinforcement portion 131. The outer circumferential side of the first reinforcement portion 131 is an outer side of the first reinforcement portion 131 in the thickness direction Z perpendicular to the wall portion 13. Taking an example in which the wall portion 13 is circular, the outer circumferential side of the first reinforcement portion 131 is an outer side of the first reinforcement portion 131 in a radial direction of the wall portion 13, and the first region 132 is a ring portion of the wall portion 13 surrounding the outer side of the first reinforcement portion 131.

The weak portion 1321 is a weaker portion of the wall portion 13. In the wall portion 13, the weak portion 1321 is more likely to rupture than other regions. When the internal pressure of the battery cell 10 reaches the initiation pressure and needs to be released, the weak portion 1321 can rupture to discharge emissions inside the battery cell 10, so as to achieve the purpose of internal pressure relief of the battery cell 10.

In this embodiment of the present application, the wall portion 13 is provided with the first reinforcement portion 131 in a protruding manner, and the first reinforcement portion 131 has an effect of reinforcing the wall portion 13 to strengthen the weak portion 1321. Since the weak portion 1321 is formed in the first region 132 located on the outer circumferential side of the first reinforcement portion 131, when the wall portion 13 is subjected to an external force to cause deformation of the portion located on the inner circumferential side of the first reinforcement portion 131, the first reinforcement portion 131 can reduce the impact of the external force on the weak portion 1321 to reduce the deformation of the weak portion 1321 to ensure the normal initiation pressure of the battery cell 10, thereby prolonging the service life of the battery cell 10.

In some embodiments, continuing to refer to FIG. 5, the wall portion 13 further includes a second region 133 located on the inner circumferential side of the first reinforcement portion 131, and the second region 133 is provided with a filling port 1331. The filling port 1331 is arranged in the second region 133 of the wall portion 13 to facilitate the filling of the electrolyte into the battery cell 10.

The second region 133 is a portion of the wall portion 13 located on the inner circumferential side of the first reinforcement portion 131. The first reinforcement portion 131 divides the wall portion 13 into two regions, one of which is the first region 132 located on the outer circumferential side of the first reinforcement portion 131, and the other is the second region 133 located on the inner circumferential side of the first reinforcement portion 131, the second region 133 being a central region of the wall portion 13. The inner circumferential side of the first reinforcement portion 131 is an inner side of the first reinforcement portion 131 in the thickness direction Z perpendicular to the wall portion 13. Taking an example in which the wall portion 13 is circular, the inner circumferential side of the first reinforcement portion 131 is an inner side of the first reinforcement portion 131 in the radial direction of the wall portion 13, and the second region 133 is a portion of the wall portion 13 located on an inner side of the first reinforcement portion 131.

The filling port 1331 is a channel provided in the second region 133 for the electrolyte to enter the battery cell 10. The filling port 1331 may be arranged at the center of the second region 133, or may be off the center of the second region 133. After the electrolyte is filled into the battery cell 10 through the filling port 1331, the filling port 1331 may be blocked by a sealing pin.

When the electrolyte is filled into the battery cell 10 through the filling port 1331, the second region 133 is easy to deform toward the inside of the battery cell 10 when being subjected to a compressing force exerted by a filling apparatus (such as a filling needle), and the first reinforcement portion 131 can reduce the impact of deformation of the second region 133 on the weak portion 1321, so as to reduce the deformation of the weak portion 1321 to reduce the risk of rupture of the weak portion 1321 before reaching the initiation pressure due to the deformation of the weak portion 1321 during the process of filling the electrolyte into the battery cell 10 through the filling port 1331.

In some embodiments, the filling port 1331 is coaxially arranged with the first reinforcement portion 131.

It can be understood that the filling port 1331 is arranged at the center of the second region 133. The filling port 1331 is configured such that the second region 133 is of a ring structure surrounding the inner side of the first reinforcement portion 131.

Taking an example in which the filling port 1331 is a circular hole and the first reinforcement portion 131 is in the shape of a circular ring, the center line of the filling port 1331 coincides with the central axis of the first reinforcement portion 131. The diameter of the filling port 1331 may be 0.05-10 mm.

In this embodiment, the filling port 1331 is coaxially arranged with the first reinforcement portion 131, so that when the electrolyte is filled into the battery cell 10 through the filling port 1331, the second region 133 is subjected to a force and deformed toward the inside of the battery cell 10, and the force acting on the first reinforcement portion 131 is uniform, which reduces the risk of deformation of the weak portion 1321 due to the excessive force acting on a part of the first reinforcement portion 131 and thus can further reduce the deformation of the weak portion 1321.

In some embodiments, continuing to refer to FIG. 5, in the thickness direction Z of the wall portion 13, the first reinforcement portion 131 is arranged, in a protruding manner, on the side of the wall portion 13 facing the electrode assembly 2. In this way, the first reinforcement portion 131 faces the inside of the battery cell 10, which reduces the excessive external space occupied by the first reinforcement portion 131 to reduce the volume of the battery cell 10.

In some embodiments, continuing to refer to FIG. 5, the first reinforcement portion 131 abuts on the electrode assembly 2 in the thickness direction Z of the wall portion 13.

It should be noted that the first reinforcement portion 131 may directly abut on the electrode assembly 2, for example, the first reinforcement portion 131 directly abuts on the tab 21 of the electrode assembly 2; and the first reinforcement portion 131 may also indirectly abut on the electrode assembly 2, for example, as shown in FIG. 5, the first reinforcement portion 131 indirectly abuts on the tab 21 of the electrode assembly 2 by means of the current collecting member 4.

When the wall portion 13 is subjected to an external force to cause the portion located on the inner circumferential side of the first reinforcement portion 131 to deform toward the inside of the battery cell 10, since the first reinforcement portion 131 abuts on the electrode assembly 2, the electrode assembly 2 has an effect of restricting the first reinforcement portion 131 to reduce the risk of deformation of the weak portion 1321.

In some embodiments, continuing to refer to FIG. 5, in the thickness direction Z of the wall portion 13, the wall portion 13 is provided with a first recess 134 on a side facing away from the electrode assembly 2 and at a position corresponding to the first reinforcement portion 131.

The first recess 134 has the same shape as the first reinforcement portion 131. For example, if the first reinforcement portion 131 is in the shape of a circular ring, the first recess 134 is also in the shape of a circular ring. The first recess 134 may be formed by stamping. After the first recess 134 is formed by stamping, the first reinforcement portion 131 may be formed correspondingly on the side of the wall portion 13 facing the electrode assembly 2.

In this embodiment, with the first recess 134, the first reinforcement portion 131 has a good buffering capacity, so that when the wall portion 13 is subjected to an external force to cause deformation of the portion located on the inner circumferential side of the first reinforcement portion 131, the first reinforcement portion 131 has a good buffering effect to prevent the transfer of the external force to the weak portion 1321 and thus further reduce the deformation of the weak portion 1321.

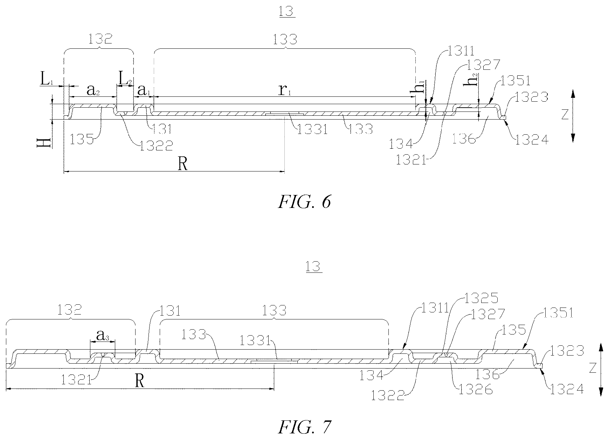

In some embodiments, referring to FIG. 6, FIG. 6 is a schematic structure diagram of the wall portion 13 shown in FIG. 5. The width of the first reinforcement portion 131 in the radial direction of the wall portion 13 is represented by a₁, the inner diameter of the first reinforcement portion 131 is represented by r₁, and the radius of the wall portion 13 is represented by R, which satisfy 0.05 ≤ a₁/R ≤ 0.8 and/or 0.05 ≤ r₁/R ≤ 0.8.

In this embodiment, the wall portion 13 is circular, and the first reinforcement portion 131 is in the shape of a circular ring. Half of the difference between the outer diameter and the inner diameter of the first reinforcement portion 131 is the width of the first reinforcement portion 131 in the radial direction of the wall portion 13.

a₁/R may be any value in the range of 0.05-0.8, for example, 0.05, 0.1, 0.2, 0.3, 0.4, 0.5, 0.6, 0.7, 0.8, etc. r₁/R may also be any value in the range of 0.05-0.8, for example, 0.05, 0.1, 0.2, 0.3, 0.4, 0.5, 0.6, 0.7, 0.8, etc.

In some embodiments, continuing to refer to FIGS. 5 and 6, the first region 132 is provided with a second reinforcement portion 135 in a protruding manner, and the second reinforcement portion 135 extends in the circumferential direction of the wall portion 13. The first region 132 includes a first connection portion 1322, the first connection portion 1322 connects the first reinforcement portion 131 with the second reinforcement portion 135, the first connection portion 1322 is located on the outer circumferential side of the first reinforcement portion 131, and the second reinforcement portion 135 is located on the outer circumferential side of the first connection portion 1322. The weak portion 1321 is formed at the first connection portion 1322.

The second reinforcement portion 135 is arranged in the first region 132 and protrudes from the first region 132. In the thickness direction Z of the wall portion 13, the second reinforcement portion 135 may be arranged, in a protruding manner, on a side of the first region 132 facing the electrode assembly 2, so that the second reinforcement portion 135 faces the inside of the battery cell 10, and the second reinforcement portion 135 may also be arranged, in a protruding manner, on a side of the wall portion 13 facing away from the electrode assembly 2, so that the second reinforcement portion 135 faces the outside of the battery cell 10.

The second reinforcement portion 135 surrounds the outer side of the first reinforcement portion 131, the second reinforcement portion 135 may be of a ring structure, such as a circular ring or a square ring, and the second reinforcement portion 135 is coaxially arranged with the first reinforcement portion 131. Illustratively, as shown in FIGS. 5 and 6, the wall portion 13 is circular, and the second reinforcement portion 135 and the first reinforcement portion 131 are both in the shape of a circular ring. The second reinforcement portion 135 is coaxially arranged with the first reinforcement portion 131.

The first connection portion 1322 is a portion of the first region 132 connected to the first reinforcement portion 131 and the second reinforcement portion 135 in the thickness direction Z perpendicular to the wall portion 13. The first connection portion 1322 is connected to the second region 133 by means of the first reinforcement portion 131. Taking an example in which the first reinforcement portion 131 and the second reinforcement portion 135 are both in the shape of a circular ring, the first connection portion 1322 is of a ring structure connected between the first reinforcement portion 131 and the second reinforcement portion 135.

Illustratively, as shown in FIGS. 5 and 6, the first connection portion 1322 and the second region 133 are both of a flat plate structure, and the first connection portion 1322 is substantially flush with the second region 133 in the thickness direction Z of the wall portion 13.

In this embodiment, the weak portion 1321 is formed at the first connection portion 1322 connected between the first reinforcement portion 131 and the second reinforcement portion 135, and the second reinforcement portion 135 may also strengthen the weak portion 1321.

In some embodiments, continuing to refer to FIGS. 5 and 6, the second reinforcement portion 135 is arranged, in a protruding manner, on the side of the first region 132 facing the electrode assembly 2, and in the thickness direction Z of the wall portion 13, the second reinforcement portion 135 includes a first surface 1351 facing the electrode assembly 2, the first surface 1351 abutting on the electrode assembly 2 to achieve electrical connection between the wall portion 13 and the electrode assembly 2.

The first surface 1351 is an end surface of the second reinforcement portion 135 facing the electrode assembly 2 in the thickness direction Z of the wall portion 13. The first surface 1351 may directly abut on the electrode assembly 2, for example, the first surface 1351 directly abuts on the tab 21 of the electrode assembly 2 to achieve the electrical connection between the wall portion 13 and the electrode assembly 2; and the first surface 1351 may also indirectly abut on the electrode assembly 2, for example, as shown in FIG. 5, the first surface 1351 directly abuts on the current collecting member 4, and the current collecting member 4 directly abuts on the tab 21 of the electrode assembly 2, so as to achieve the electrical connection between the wall portion 13 and the electrode assembly 2.

The first surface 1351 of the second reinforcement portion 135 abuts on the electrode assembly 2, which on the one hand achieves the electrical connection between the wall portion 13 and the electrode assembly 2 to facilitate the output of electric energy of the battery cell 10 by means of the wall portion 13, and on the other hand allows the electrode assembly 2 to be supported by the second reinforcement portion 135 to improve the stability of the electrode assembly 2 inside the shell 1.

In some embodiments, continuing to refer to FIGS. 5 and 6, the first reinforcement portion 131 does not extend beyond the first surface 1351 in a direction of the wall portion 13 pointing toward the electrode assembly 2.

The direction of the wall portion 13 pointing toward the electrode assembly 2 is a direction of the wall portion 13 facing the electrode assembly 2 in the thickness direction Z.

In this embodiment, the first reinforcement portion 131 does not exceed the first surface 1351 to ensure that the first surface 1351 can effectively abut on the electrode assembly 2.

In some embodiments, in the thickness direction Z of the wall portion 13, the first reinforcement portion 131 includes a second surface 1311 facing the electrode assembly 2, the second surface 1311 being flush with the first surface 1351.

The second surface 1311 is an end surface of the first reinforcement portion 131 facing the electrode assembly 2 in the thickness direction Z of the wall portion 13. The second surface 1311 is flush with the first surface 1351, so that the second surface 1311 and the first surface 1351 are in the same plane, and both the second surface 1311 and the first surface 1351 can abut on the electrode assembly 2. On the one hand, the current-passing area is increased. Taking an example in which both the second surface 1311 and the first surface 1351 directly abut on the current collecting member 4, and the current collecting member 4 directly abuts on the tab 21 of the electrode assembly 2, both the second surface 1311 and the first surface 1351 come into contact with the current collecting member 4, increasing the current-passing area between the current collecting member 4 and the wall portion 13. On the other hand, the first reinforcement portion 131 can abut on the electrode assembly 2, reducing the impact on the weak portion 1321 when the portion of the wall portion 13 located on the inner circumferential side of the first reinforcement portion 131 is subjected to a force.

In other embodiments, in the thickness direction Z of the wall portion 13, the second surface 1311 may also be farther away from the electrode assembly 2 than the first surface 1351.

In some embodiments, continuing to refer to FIGS. 5 and 6, in the thickness direction Z of the wall portion 13, the wall portion 13 includes a third surface 1324 that faces away from the electrode assembly 2 and is farthest from the first surface 1351, and the first connection portion 1322 is located between the first surface 1351 and the third surface 1324 in the thickness direction Z of the wall portion 13.

The third surface 1324 may be formed in the first region 132 or in the second region 133.

In this embodiment, the first connection portion 1322 is located between the first surface 1351 and the third surface 1324 in the thickness direction Z of the wall portion 13, making it difficult for the external force to directly act on the first connection portion 1322, so as to effectively reduce the impact of the external force on the weak portion 1321 during the production and use of the battery cell 10. For example, when the shell 1 is placed on an object, the third surface 1324 of the wall portion 13 comes into contact with the object, and the first connection portion 1322 is in a suspended state and does not directly come into contact with the object to receive force, achieving the purpose of protecting the weak portion 1321.

In some embodiments, continuing to refer to FIGS. 5 and 6, the first region 132 further includes an edge portion 1323. The edge portion 1323 is connected to the second reinforcement portion 135 and located on an outer circumferential side of the second reinforcement portion 135. In the thickness direction Z of the wall portion 13, a surface of the edge portion 1323 facing away from the electrode assembly 2 is the third surface 1324.

The edge portion 1323 may be of a circular ring structure surrounding the second reinforcement portion 135, and the outer diameter of the edge portion 1323 is the diameter of the wall portion 13. Taking an example in which the wall portion 13 is the end cap 12 of the shell 1, the edge portion 1323 may be connected to the shell body 11 of the shell 1, for example, by welding, so that the end cap 12 blocks the opening of the shell body 11.

The edge portion 1323 has an effect of protecting the first connection portion 1322, so that when the shell 1 is placed on the object, the edge portion 1323 comes into contact with the object, and the first connection portion 1322 is in a suspended state and does not directly come into contact with the object to receive force, making it difficult for the external force to directly act on the first connection portion 1322.

In some embodiments, continuing to refer to FIG. 6, in the thickness direction Z of the wall portion 13, a distance between the third surface 1324 and the first surface 1351 is represented by H, the height of the first reinforcement portion 131 protruding from the wall portion 13 is represented by hi, and the height of the second reinforcement portion 135 protruding from the wall portion 13 is represented by h₂, which satisfy 0.1 ≤ h/H ≤ 0.9 and/or 0.1 ≤ h₂/H ≤ 0.9.

h₁/H may be any value in the range of 0.1-0.9, for example, 0.1, 0.2, 0.3, 0.4, 0.5, 0.6, 0.7, 0.8, 0.9, etc. h₂/H may also be any value in the range of 0.1-0.9, for example, 0.1, 0.2, 0.3, 0.4, 0.5, 0.6, 0.7, 0.8, 0.9, etc.

h₁ and h₂ may be equal or not. In the embodiment in which the first surface 1351 is flush with the second surface 1311, h₁ = h₂.

In some embodiments, continuing to refer to FIGS. 5 and 6, in the thickness direction Z of the wall portion 13, the first region 132 is provided with a second recess 136 on a side facing away from the electrode assembly 2 and at a position corresponding to the second reinforcement portion 135.

The second recess 136 has the same shape as the second reinforcement portion 135. For example, if the second reinforcement portion 135 is in the shape of a circular ring, the second recess 136 is also in the shape of a circular ring. The second recess 136 may be formed by stamping. After the second recess 136 is formed by stamping, the second reinforcement portion 135 may be formed correspondingly on the side of the first region 132 facing the electrode assembly 2.

With the second recess 136, the second reinforcement portion 135 has a good buffering capacity, so that when a region of the wall portion 13 located on the outer circumferential side of the second reinforcement portion 135 is subjected to an external force, the second reinforcement portion 135 has a good buffering effect to prevent the transfer of the external force to the weak portion 1321 and thus further reduce the deformation of the weak portion 1321. For example, taking an example in which the wall portion 13 serves as the end cap 12 of the shell 1, when the wall portion 13 is assembled with the shell body 11, the edge portion 1323 of the wall portion 13 is subjected to the force exerted by the shell body 11, and the buffering effect of the second reinforcement portion 135 can reduce the deformation of the weak portion 1321 during this process.

In some embodiments, the second reinforcement portion 135 is welded to the electrode assembly 2 to achieve electrical connection between the wall portion 13 and the electrode assembly 2.

Specifically, the first surface 1351 of the second reinforcement portion 135 directly abuts on the tab 21 of the electrode assembly 2, and the second reinforcement portion 135 is welded to the tab 21 of the electrode assembly 2.

In this embodiment, welding the second reinforcement portion 135 to the electrode assembly 2 can effectively improve the stability of the electrical connection between the wall portion 13 and the electrode assembly 2.

In the embodiment in which the first region 132 is provided with the second recess 136, the second recess 136 may be regarded as a welding groove. Providing the second recess 136 may reduce the thickness of the second reinforcement portion 135, and can improve the firmness of welding between the second reinforcement portion 135 and the tab 21.

In the embodiment in which the second region 133 is provided with the filling port 1331, since the filling port 1331 is arranged in the second region 133 while a second protrusion is arranged in the first region 132, the filling port 1331 is far away from the second protrusion, so that after the electrolyte is filled into the battery cell 10 through the filling port 1331, it is difficult for the residual electrolyte near the filling port 1331 to flow into the second recess 136, and thus it is less likely to affect the firmness of welding between the second reinforcement portion 135 and the tab 21. In the embodiment in which the wall portion 13 is provided with the first recess 134, the first recess 134 can block the electrolyte from flowing into a second groove 32, which further reduces the risk of affecting the firmness of welding between the second reinforcement portion 135 and the tab 21 due to the residual electrolyte near the filling port 1331 flowing to the second recess 136.

In some other embodiments, continuing to refer to FIG. 5, the battery cell 10 further includes a current collecting member 4, the current collecting member 4 is arranged between the wall portion 13 and the electrode assembly 2 in the thickness direction Z of the wall portion 13, the current collecting member 4 is connected to the electrode assembly 2, and the second reinforcement portion 135 is welded to the current collecting member 4, so as to achieve the electrical connection between the wall portion 13 and the electrode assembly 2.

The current collecting member 4 may have the same shape as the wall portion 13. For example, both the wall portion 13 and the current collecting member 4 are circular.

Specifically, the current collecting member 4 is arranged between the tab 21 of the electrode assembly 2 and the wall portion 13, and the current collecting member 4 is connected to the tab 21. Illustratively, the current collecting member 4 is welded to the tab 21.

In this embodiment, the second reinforcement portion 135 is welded to the current collecting member 4, improving the stability of the electrical connection between the wall portion 13 and the electrode assembly 2.

In the embodiment in which the second recess 136 is arranged in the first region 132, providing the second recess 136 may reduce the thickness of the second reinforcement portion 135, and can improve the firmness of welding between the second reinforcement portion 135 and the current collecting member 4.

In the embodiment in which the filling port 1331 is arranged in the second region 133, since the filling port 1331 is arranged in the second region 133 while the second protrusion is arranged in the first region 132, the filling port 1331 is far away from the second protrusion, so that after the electrolyte is filled into the battery cell 10 through the filling port 1331, it is difficult for the residual electrolyte near the filling port 1331 to flow into the second recess 136, and thus it is less likely to affect the firmness of welding between the second reinforcement portion 135 and the current collecting member 4. In the embodiment in which the first recess 134 is arranged in the wall portion 13, the first recess 134 can block the electrolyte from flowing into the second groove 32, which further reduces the risk of affecting the firmness of welding between the second reinforcement portion 135 and the current collecting member 4 due to the residual electrolyte near the filling port 1331 flowing to the second recess 136.

In some embodiments, in the radial direction of the wall portion 13, the width of the second reinforcement portion 135 is represented by a₂, the radius of the wall portion 13 is represented by R, a distance from an outer edge of the second reinforcement portion 135 to an outer edge of the wall portion 13 is represented by Li, and a distance between the first reinforcement portion 131 and the second reinforcement portion 135 is represented by L₂, which satisfy 0.05 ≤ a₂/R ≤ 0.8, and/or 0.02 ≤ L₁/R ≤ 0.8, and/or 0.05 ≤ L₂/R ≤ 0.8.

In this embodiment, the wall portion 13 is circular, and the second reinforcement portion 135 is in the shape of a circular ring. Half of the difference between the outer diameter and the inner diameter of the second reinforcement portion 135 is the width of the second reinforcement portion 135 in the radial direction of the wall portion 13. The distance between the outer edge of the first reinforcement portion 131 and the inner edge of the second reinforcement portion 135 is the distance between the first reinforcement portion 131 and the second reinforcement portion 135. In the embodiment in which the first region 132 includes the edge portion 1323, an outer edge of the edge portion 1323 is the outer edge of the wall portion 13.

a₂/R may be any value in the range of 0.05-0.8, for example, 0.05, 0.1, 0.2, 0.3, 0.4, 0.5, 0.6, 0.7, 0.8, etc. L₁/R may also be any value in a range of 0.02-0.8, for example, 0.02, 0.05, 0.1, 0.2, 0.3, 0.4, 0.5, 0.6, 0.7, 0.8, etc. L₂/R may also be any value in a range of 0.05-0.8, for example, 0.05, 0.1, 0.2, 0.3, 0.4, 0.5, 0.6, 0.7, 0.8, etc.

In some embodiments, referring to FIG. 7, FIG. 7 is a schematic structure diagram of the wall portion 13 according to some other embodiments of the present application. In the thickness direction Z of the wall portion 13, a part of the first connection portion 1322 protrudes to form a third reinforcement portion 1325, the third reinforcement portion 1325 extends in the circumferential direction of the wall portion 13, and the weak portion 1321 is formed at the third reinforcement portion 1325.

The third reinforcement portion 1325 may be of a ring structure, such as a circular ring or a square ring. Taking an example in which the wall portion 13 is circular, a circular ring structure may be formed by the third reinforcement portion 1325 extending in the circumferential direction of the wall portion 13. The third reinforcement portion 1325 may be coaxially arranged with the first reinforcement portion 131. The first connection portion 1322 may form one or more third reinforcement portions 1325.

A third recess 1326 is formed in the first connection portion 1322 at a position corresponding to the third reinforcement portion 1325, and the third recess 1326 has the same shape as the third reinforcement portion 1325. The third recess 1326 may be formed by stamping. In the thickness direction Z of the wall portion 13, after the second recess 136 is formed by stamping on one side of the first connection portion 1322, the third reinforcement portion 1325 may be correspondingly formed on the other side of the first connection portion 1322.

In the thickness direction Z of the wall portion 13, the first reinforcement portion 131, the second reinforcement portion 135 and the third reinforcement portion 1325 may be located on the same side or different sides of the wall portion 13. Illustratively, in FIG. 7, the first reinforcement portion 131, the second reinforcement portion 135 and the third reinforcement portion 1325 are located on the same side of the wall portion 13, and all face the electrode assembly 2 (not shown in FIG. 7).

In the embodiment in which the first connection portion 1322 is located between the first surface 1351 and the third surface 1324 in the thickness direction Z of the wall portion 13, since the third reinforcement portion 1325 is a portion of the first connection portion 1322, the third reinforcement portion 1325 is also located between the first surface 1351 and the third surface 1324 in the thickness direction Z of the wall portion 13.

In this embodiment, the third reinforcement portion 1325 can strengthen the first connection portion 1322 and thus further reduce the impact on the weak portion 1321 due to the deformation of the wall portion 13 by force.

In other embodiments, the weak portion 1321 may also be formed in other regions of the first connection portion 1322 except for the third reinforcement portion 1325.

In some embodiments, continuing to refer to FIG. 7, the width of the third reinforcement portion 1325 in the radial direction of the wall portion 13 is represented by a₃, and the radius of the wall portion 13 is represented by R, which satisfy 0.05 ≤ a₃/R ≤ 0.8.

In this embodiment, the wall portion 13 is circular, and the third reinforcement portion 1325 is in the shape of a circular ring. Half of the difference between the outer diameter and the inner diameter of the third reinforcement portion 1325 is the width of the third reinforcement portion 1325 in the radial direction of the wall portion 13.

a₃/R may be any value in the range of 0.05-0.8, for example, 0.05, 0.1, 0.2, 0.3, 0.4, 0.5, 0.6, 0.7, 0.8, etc.

In some embodiments, referring to FIGS. 6 and 7, the first region 132 is provided with an indentation 1327, and a weak portion 1321 is formed in the first region 132 at a position where the indentation 1327 is provided.

After the indentation 1327 is formed in the first region 132, the remaining portion of the first region 132 at the indentation 1327 is the weak portion 1321. The weak portion 1321 has the same shape as the indentation 1327. The indentation 1327 may be in various shapes, for example, be rectangular, circular, oval, ring-shaped, U-shaped, C-shaped, H-shaped, etc. The indentation 1327 may be formed in various ways, such as stamping or milling.

The weak portion 1321 is correspondingly formed by means of providing the indentation 1327 in the first region 132, so that the weak portion 1321 is thinner than other regions and is more likely to rupture, and the weak portion 1321 is formed by a simple forming method.

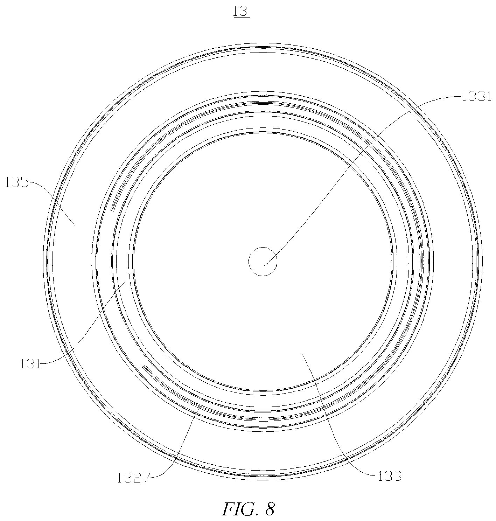

In some embodiments, referring to FIG. 8, FIG. 8 is a top view of the wall portion 13 shown in FIG. 6. The indentation 1327 is arranged around the first reinforcement portion 131, and the indentation 1327 is of a non-closed structure with a distance between two ends.

Illustratively, the indentation 1327 is C-shaped.

The wall portion 13 can be turned outward to open in a region defined by the indentation 1327 during pressure relief of the battery cell 10, so that the battery cell 10 has a large pressure relief area, improving the pressure relief efficiency.

In some other embodiments, the indentation 1327 is arranged around the first reinforcement portion 131, and the indentation 1327 is of a closed structure connected end-to-end.

Illustratively, the indentation 1327 is in the shape of a circular ring.

The wall portion 13 can be separated outward to open in the region defined by the indentation 1327 during pressure relief of the battery cell 10, so that the battery cell 10 has a large pressure relief area, improving the pressure relief efficiency.

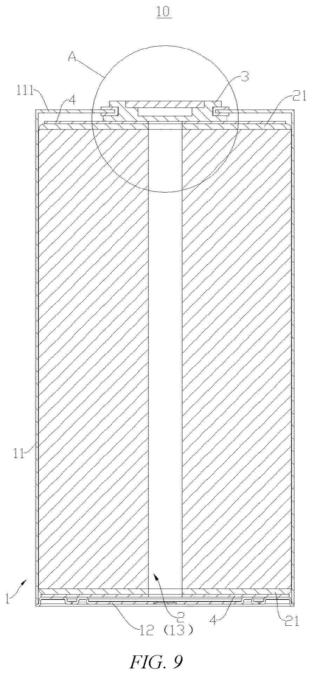

In some embodiments, referring to FIG. 9, FIG. 9 is a cross-sectional view of a battery cell 10 according to some other embodiments of the present application. The shell 1 includes a shell body 11 and an end cap 12, an opening is formed at one end of the shell body 11, the shell body 11 includes a bottom wall 111 opposite the opening, and the end cap 12 is connected to the shell body 11 and closes the opening. One of the bottom wall 111 and the end cap 12 is the wall portion 13. If the bottom wall 111 of the shell body 11 serves as the wall portion 13, the bottom wall 111 of the shell body 11 has a pressure relief capability; and if the end cap 12 of the shell 1 serves as the wall portion 13, the end cap 12 has a pressure relief capability.

Illustratively, in FIG. 9, the end cap 12 serves as the wall portion 13.

In some embodiments, continuing to refer to FIG. 9, the battery cell 10 further includes an electrode terminal 3, and in the thickness direction Z of the wall portion 13, the electrode terminal 3 is arranged at an end of the shell 1 opposite the wall portion 13, and the electrode terminal 3 is electrically connected to the electrode assembly 2.

The electrode terminal 3 may be directly connected to the electrode assembly 2, for example, the electrode terminal 3 is welded to the tab 21 of the electrode assembly 2. As shown in FIG. 9, the electrode terminal 3 may also be indirectly connected to the electrode assembly 2 by means of the current collecting member 4.

In the embodiment in which the bottom wall 111 of the shell body 11 serves as the wall portion 13, the electrode terminal 3 is arranged on the end cap 12, and the electrode terminal 3 is riveted to the end cap 12 and remains insulated from the end cap 12. As shown in FIG. 9, in the embodiment in which the end cap 12 serves as the wall portion 13, the electrode terminal 3 is arranged on the bottom wall 111 of the shell body 11, and the electrode terminal 3 is riveted to the bottom wall 111 of the shell body 11 and remains insulated from the bottom wall 111.

In this embodiment, the electric energy of the battery cell 10 can be conveniently output by means of the electrode terminal 3.

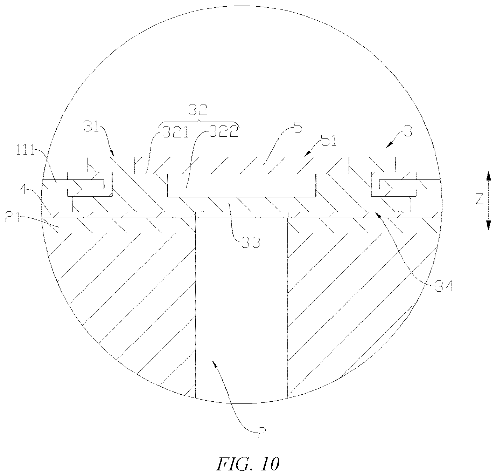

In some embodiments, referring to FIG. 10, FIG. 10 is a partial enlarged view of part A of the battery cell 10 shown in FIG. 9. The electrode terminal 3 includes a first outer surface 31 facing away from the electrode assembly 2 in the thickness direction Z of the wall portion 13, the electrode terminal 3 is provided with a groove 32 that is recessed from the first outer surface 31 toward the electrode assembly 2, a second connection portion 33 is formed in the electrode terminal 3 at a position where the groove 32 is provided, and the second connection portion 33 is connected to the electrode assembly 2.

The first outer surface 31 is an end surface of an end of the electrode terminal 3 facing away from the electrode assembly 2 in the thickness direction Z of the wall portion 13. In the thickness direction Z of the wall portion 13, the electrode terminal 3 further includes a first inner surface 34 opposite the first outer surface 31, and a portion of the electrode terminal 3 located between a bottom surface of the groove 32 and the first inner surface 34 is the second connection portion 33.

Illustratively, the second connection portion 33 is indirectly connected to the tab 21 of the electrode assembly 2 by means of the current collecting member 4, the second connection portion 33 is welded to the current collecting member 4, and the current collecting member 4 is welded to the tab 21 of the electrode assembly 2. In the embodiment in which the filling port 1331 is provided in the second region 133 of the wall portion 13, providing the filling port 1331 in the electrode terminal 3 prevents insufficient soldering on the electrode terminal 3 caused by the residual electrolyte near the filling port 1331 when the filling port 1331 is arranged in the electrode terminal 3.

In this embodiment, providing the groove 32 in the electrode terminal 3 reduces the weight of the electrode terminal 3 and reduces the production cost. In addition, since the electrode terminal 3 is provided with the groove 32, the second connection portion 33 of the electrode terminal 3 is thinner, which can achieve the external welding for the electrode terminal 3, improving the stability of the electrical connection between the electrode terminal 3 and the electrode assembly 2.

In some embodiments, continuing to refer to FIG. 10, the battery cell 10 further includes a blocking member 5, and the blocking member 5 is connected to the electrode terminal 3 and blocks the groove 32. In the thickness direction Z of the wall portion 13, the blocking member 5 includes a second outer surface 51 facing away from the electrode assembly 2, and the second outer surface 51 is flush with the first outer surface 31.

The blocking member 5 may be made of metal, such as copper, iron, aluminum, stainless steel, or aluminum alloy. The blocking member 5 may be welded and fixed to the electrode terminal 3.

Illustratively, the groove 32 includes a first groove 321 and a second groove 322. The first groove 321 and the second groove 322 are arranged in a depth direction of the groove 32, the first groove 321 is recessed from the first outer surface 31 in the depth direction of the groove 32, the second groove 322 is recessed from a bottom surface of the first groove 321 in the depth direction of the groove 32, a bottom surface of the second groove 322 is the bottom surface of the groove 32, and the blocking member 5 abuts against the bottom surface of the first groove 321 to block the groove 32.

The second outer surface 51 of the blocking member 5 and the first outer surface 31 of the electrode terminal 3 can jointly form a flat interface, which is conducive to welding with other components (such as a busbar component) to achieve a large current-passing area. In addition, the second outer surface 51 is flush with the first outer surface 31, which facilitates butt-welding between the blocking member 5 and the electrode terminal 3.

The embodiments of the present application provide a battery 100, including a case 20 and a battery cell 10 according to any one of the embodiments described above. The battery cell 10 is accommodated in the case 20.

The embodiments of the present application further provide a power consuming device, including the battery 100 according to any one of the embodiments described above.

In addition, as shown in FIGS. 4 to 6, the embodiments of the present application further provide a cylindrical battery 100, including a shell 1, an electrode assembly 2, an electrode terminal 3 and a current collecting member 4. The electrode assembly 2 is accommodated in the shell 1. The shell 1 includes a shell body 11 and an end cap 12. The shell body 11 is provided with an opening, and the end cap 12 closes the opening of the shell body 11. The end cap 12 is provided with a first reinforcement portion 131 in a protruding manner. The end cap 12 includes a first region 132 located on an outer circumferential side of the first reinforcement portion 131 and a second region 133 located on an inner circumferential side of the first reinforcement portion 131. The first region 132 is provided with a second reinforcement portion 135 in a protruding manner, and both the first reinforcement portion 131 and the second reinforcement portion 135 extend in a circumferential direction of the end cap 12. The second region 133 includes a first connection portion 1322 that connects the first reinforcement portion 131 with the second reinforcement portion 135. The first connection portion 1322 is located on the outer circumferential side of the first reinforcement portion 131, and the second reinforcement portion 135 is located on an outer circumferential side of the first connection portion 1322. A weak portion 1321 is formed in the first connection portion 1322, and the weak portion 1321 is configured to rupture during pressure relief of the battery cell 10. The second region 133 is provided with a filling port 1331. The electrode terminal 3 is arranged on an end of the shell 1 opposite the end cap 12. A positive tab 21a of the electrode assembly 2 is electrically connected to the electrode terminal 3 by means of a current collecting member 4, and a negative tab 21b of the electrode assembly 2 is electrically connected to the second reinforcement portion 135 by means of another current collecting member 4.

In such a battery cell 10, when an electrolyte is filled into the battery cell 10 through the filling port 1331, the second region 133 is easy to deform toward the inside of the battery cell 10 when being subjected to a compressing force exerted by a filling apparatus, and the first reinforcement portion 131 can reduce the impact of deformation of the second region 133 on the weak portion 1321, so as to reduce the deformation of the weak portion 1321 to reduce the risk of rupture of the weak portion 1321 before reaching the initiation pressure due to the deformation of the weak portion 1321 during the process of filling the electrolyte into the battery cell 10 through the filling port 1331, thereby prolonging the service life of the battery cell 10.

It should be noted that the embodiments and the features in the embodiments in the present application may be combined with each other without conflicts.

The foregoing embodiments are merely used to explain the technical solutions of the present application, and are not intended to limit the present application, and various modifications and changes of the present application can be made by those skilled in the art. Any modifications, equivalent substitutions, improvements and the like made within the spirit and principle of the present application should fall within the scope of protection of the present application.

## Claims

1. A battery cell, comprising:
an electrode assembly; and
a shell, which accommodates the electrode assembly and comprises a wall portion arranged opposite the electrode assembly in a thickness direction of the wall portion,
wherein the wall portion is provided with a first reinforcement portion in a protruding manner, the first reinforcement portion extends in a circumferential direction of the wall portion, the wall portion comprises a first region located on an outer circumferential side of the first reinforcement portion, and a weak portion is formed in the first region and is configured to rupture during pressure relief of the battery cell.

2. The battery cell according to claim 1, wherein the wall portion further comprises a second region located on an inner circumferential side of the first reinforcement portion, the second region being provided with a filling port.

3. The battery cell according to claim 2, wherein the filling port is coaxially arranged with the first reinforcement portion.

4. The battery cell according to any one of claims 1-3, wherein in the thickness direction of the wall portion, the first reinforcement portion is arranged, in a protruding manner, on a side of the wall portion facing the electrode assembly.

5. The battery cell according to claim 4, wherein the first reinforcement portion abuts on the electrode assembly in the thickness direction of the wall portion.

6. The battery cell according to claim 4 or 5, wherein in the thickness direction of the wall portion, the wall portion is provided with a first recess on a side facing away from the electrode assembly and at a position corresponding to the first reinforcement portion.

7. The battery cell according to any one of claims 1-6, wherein the width of the first reinforcement portion in a radial direction of the wall portion is represented by a₁, the inner diameter of the first reinforcement portion is represented by r₁, and the radius of the wall portion is represented by R, which satisfy 0.05 ≤ a₁/R ≤ 0.8 and/or 0.05 ≤ r₁/R ≤ 0.8.

8. The battery cell according to any one of claims 1-7, wherein the first region is provided with a second reinforcement portion in a protruding manner, and the second reinforcement portion extends in a circumferential direction of the wall portion; and
the first region comprises a first connection portion that connects the first reinforcement portion with the second reinforcement portion, the first connection portion being located on the outer circumferential side of the first reinforcement portion, and the second reinforcement portion being located on an outer circumferential side of the first connection portion,
wherein the weak portion is formed at the first connection portion.

9. The battery cell according to claim 8, wherein the second reinforcement portion is arranged, in a protruding manner, on a side of the first region facing the electrode assembly, and in the thickness direction of the wall portion, the second reinforcement portion comprises a first surface facing the electrode assembly, the first surface abutting on the electrode assembly to achieve electrical connection between the wall portion and the electrode assembly.

10. The battery cell according to claim 9, wherein the first reinforcement portion does not extend beyond the first surface in a direction of the wall portion pointing toward the electrode assembly.

11. The battery cell according to claim 9 or 10, wherein in the thickness direction of the wall portion, the first reinforcement portion comprises a second surface facing the electrode assembly, the second surface being flush with the first surface.

12. The battery cell according to any one of claims 9-11, wherein in the thickness direction of the wall portion, the wall portion comprises a third surface that faces away from the electrode assembly and is farthest from the first surface, and the first connection portion is located between the first surface and the third surface in the thickness direction of the wall portion.

13. The battery cell according to claim 12, wherein the first region further comprises an edge portion, which is connected to the second reinforcement portion and located on an outer circumferential side of the second reinforcement portion; and
in the thickness direction of the wall portion, a surface of the edge portion facing away from the electrode assembly is a third surface.

14. The battery cell according to claim 12 or 13, wherein in the thickness direction of the wall portion, a distance between the third surface and the first surface is represented by H, the height of the first reinforcement portion protruding from the wall portion is represented by hi, and the height of the second reinforcement portion protruding from the wall portion is represented by h₂, which satisfy 0.1 ≤ h₁/H ≤ 0.9 and/or 0.1 ≤ h₂/H ≤ 0.9.

15. The battery cell according to any one of claims 9-14, wherein in the thickness direction of the wall portion, the first region is provided with a second recess on a side away from the electrode assembly and at a position corresponding to the second reinforcement portion.

16. The battery cell according to any one of claims 9-15, wherein the second reinforcement portion is welded to the electrode assembly to achieve electrical connection between the wall portion and the electrode assembly; or
the battery cell further comprises a current collecting member, which is arranged between the wall portion and the electrode assembly in the thickness direction of the wall portion and is connected to the electrode assembly, and the second reinforcement portion is welded to the current collecting member to achieve the electrical connection between the wall portion and the electrode assembly.

17. The battery cell according to any one of claims 8-16, wherein in the radial direction of the wall portion, the width of the second reinforcement portion is represented by a₂, the radius of the wall portion is represented by R, a distance from an outer edge of the second reinforcement portion to an outer edge of the wall portion is represented by Li, and a distance between the first reinforcement portion and the second reinforcement portion is represented by L₂, which satisfy 0.05 ≤ a₂/R ≤ 0.8, and/or 0.02 ≤ L₁/R ≤ 0.8, and/or 0.05 ≤ L₂/R ≤ 0.8.

18. The battery cell according to any one of claims 8-17, wherein in the thickness direction of the wall portion, a part of the first connection portion protrudes to form a third reinforcement portion, the third reinforcement portion extends in the circumferential direction of the wall portion, and the weak portion is formed at the third reinforcement portion.

19. The battery cell according to claim 18, wherein the width of the third reinforcement portion in the radial direction of the wall portion is represented by a₃, and the radius of the wall portion is represented by R, which satisfy 0.05 ≤ a₃/R ≤ 0.8.

20. The battery cell according to any one of claims 1-19, wherein the first region is provided with an indentation, and a weak portion is formed in the first region at a position where the indentation is provided.

21. The battery cell according to claim 20, wherein the indentation is arranged around the first reinforcement portion; and
the indentation is of a non-closed structure with a distance between two ends; or
the indentation is of a closed structure connected end-to-end.

22. The battery cell according to any one of claims 1-21, wherein the shell comprises:
a shell body, which is provided with an opening at one end and comprises a bottom wall opposite the opening; and
an end cap, which is connected to the shell body and closes the opening,
wherein one of the bottom wall and the end cap is the wall portion.

23. The battery cell according to any one of claims 1-22, wherein the battery cell further comprises an electrode terminal, which is arranged at an end of the shell opposite the wall portion in the thickness direction of the wall portion and is electrically connected to the electrode assembly.

24. The battery cell according to claim 23, wherein the electrode terminal comprises a first outer surface facing away from the electrode assembly in the thickness direction of the wall portion, the electrode terminal is provided with a groove that is recessed from the first outer surface toward the electrode assembly, a second connection portion is formed in the electrode terminal at a position where the groove is provided, and the second connection portion is connected to the electrode assembly.

25. The battery cell according to claim 24, wherein the battery cell further comprises a blocking member, which is connected to the electrode terminal and blocks the groove; and in the thickness direction of the wall portion, the blocking member comprises a second outer surface facing away from the electrode assembly, the second outer surface being flush with the first outer surface.

26. A battery, comprising:
a case; and
a battery cell according to any one of claims 1-25 accommodated in the case.

27. A power consuming device, comprising a battery according to claim 26.
